# EUROPEAN PATENT APPLICATION

(11) **EP 0 829 345 A2**
(43) Date of publication of application: **18.03.1998**
(21) Application number: 97114859.8
(22) Date of filing: 27.08.1997
(51) Int. Cl.: B32B 27/32, B65D 77/20

(54) **Multilayer sheet and easily-openable container**

(30) Priority: 11.09.1996 JP 240235/96
(71) Applicant: IDEMITSU PETROCHEMICAL CO., LTD., Minato-ku, Tokyo 108 (JP)
(72) Inventor: Shirouzu, Shigenori, Fukuoka-shi, Fukuoka 814 (JP); Takahashi, Hiroyuki, Himeji-shi, Hyogo 672 (JP)
(74) Representative: Strehl Schübel-Hopf Groening & Partner

(57) **Abstract**

A multilayer sheet which has a multilayer structure comprising at least a main layer (A) comprising a homopolypropylene having an isotactic rate of at least 90% and an easily-peelable layer (B) which is in contact with the main layer (A) and comprises a propylene-ethylene random copolymer containing 2 to 50% by weight of copolymerized ethylene or a homopolypropylene having a syndiotactic rate of at least 80%, and a transparent easily-openable container which has the same multilayer structure as that of the multilayer sheet and has such a high heat resistance to tolerate retorting.

## Description

### BACKGROUND OF THE INVENTION

### (a) Field of the Invention

The present invention relates to a transparent multilayer sheet useful in packaging fields, particularly for production of containers, and to an easily-openable container which is transparent, easy to open after sealing and so resistant to heat as to tolerate high-temperature retorting, and, therefore, is useful particularly for packaging foods, medicines and cosmetics.

### (b) Description of the Related Art

With the recent qualitative advance of the life of consumers and the enforcement of the PL law, there have occurred demands for easily-peelable containers which are transparent, tolerate retorting and have excellent openability. Containers need transparency to permit checking whether the contents meet requirements or checking for the abnormality of the contents. Easy peelability is necessary to ensure even children and physically handicapped people easy peeling of lids and safe opening. When lids are difficult to peel, the contents may be spilled out, or users may use their teeth or cutlery, to break teeth or be injured.

Common means for contributing easy peelability to hermetically sealed containers are the optimization of the conditions of sealing lids and container bodies made of the same materials, and the use of easily-peelable lids bearing a special sealant layer at areas to be sealed. However, the optimization of sealing conditions tends to cause sealing failure because it needs difficult pinpoint adjustment of sealing conditions to make sufficient seal strength coexist with easy peelability. Easily-peelable lids needs special work which increases the production cost, and also needs careful adjustment of sealing conditions to sufficiently exhibit their easy peelability.

Another known method of contributing easy peelability is the use of multilayer containers having easily-peelable layer are used as container bodies, thereby performing opening by the delamination of the container bodies and not by the peeling between the sealed surfaces of lids and container bodies. This method needs no consideration at the time of sealing except for strong sealing for ensuring hermetic sealing, and can prevent seal failure by easy adjustment of sealing conditions.

Desirable sheets for the production of transparent containers tolerable to retorting are polypropylene sheets having high transparency and good heat resistance, but there have been known no polypropylene multilayer sheets or containers which are easily-peelable and are as well transparent and tolerable to high-temperature retorting. Examples of polypropylene multilayer sheets known to have easy-peelability are polypropylene multilayer sheets comprising a polypropylene layer, a polyethylene layer as a peelable layer and, between the two layers, a polypropylene/polyethylene blend resin layer for controlling peeling strength. In these multilayer sheets, the polypropylene/polyethylene blend resin layer is provided for controlling peel strength by making use of the incompatibility of polypropylene and polyethylene which do not adhere to each other on coextrusion, with one component of the greater content working as an anchor to the polypropylene layer or the polyethylene layer. These multilayer sheets, unfortunately, are poor in transparency due to the incorporation of polyethylene. Further, the insufficient heat resistance of polyethylene limits retorting temperature to 120°C or lower. Additionally, containers formed therefrom involve the problem that the polyethylene layer swells when oil-containing materials are packed.

### SUMMARY OF THE INVENTION

An object of the present invention is to provide a polypropylene multilayer sheet and an easily-openable container which have a peelable polypropylene-base resin layer having a peel strength suitable for the production of easily-peelable container.

To solve the above problems, the inventors made investigation to develop multilayer sheets which comprise a base layer of polypropylene excelling in transparency and heat resistance and an easily-peelable layer of a polypropylene-base resin which is also excellent in transparency and heat resistance and fixed to the base layer with a moderate peeling strength. From the fact that polypropylene does not adhere to polyethylene but adhere to polypropylene, first the inventors noticed the possible presence of propylene/ethylene copolymers having moderate adhesion strength with polypropylene or polyethylene. Also they paid attention to the possibility that the incompatibility of polypropylene with polyethylene is due to the difference in molecular chain structures. They consequently confirmed that even propylene-ethylene random copolymers containing such a small amount of copolymerized ethylene as several % differ much from homopolypropylene in the molecular chain structures, while block copolymers of the same copolymerized ethylene content are not so different in molecular chain structures. They further confirmed that common polypropylenes comprising mainly isotactic components have poor compatibility with syndiotactic polypropylenes which differ remarkably from isotactic polypropylenes in molecular chain structures. Based on these findings, the inventors have completed the present invention.

That is, the present invention provides a multilayer sheet which has a multilayer structure comprising at least
a main layer (A) comprising a homopolypropylene having an isotactic rate of at least 90% and
an easily-peelable layer (B) which is in contact with the main layer (A) and comprises a propylene-ethylene random copolymer containing 2 to 50% by weight of copolymerized ethylene or a homopolypropylene having a syndiotactic rate of at least 80%.

The present invention further provides an easily-openable container (hereinafter, will be referred to as easily-openable container (a)) which comprises
a multilayer structure of the multilayer sheet of claim 1 comprising at least the main layer (A) and the easily-peelable layer (B),
a concave portion having an opening and
a flange which extends outwardly from the opening and is for annularly sealing thereon on the easily-peelable layer (B) the easily-openable container with a lid.

The present invention further provides as an improvement of the easily-openable container (a) an easily-openable container (hereinafter, will be referred to as easily-openable container (a')), wherein the flange, between the opening and an annular sealing portion for annularly sealing the easily-openable container with a lid, has an annular weakening line in the easily-peelable layer (B).

### BRIEF DESCRIPTION OF THE DRAWING

Fig. 1 is a partially sectional view illustrating the structure of a multilayer sheet according to an embodiment of the present invention.

Fig. 2 is a sectional view of an easily-openable container according to an embodiment of the present invention.

Fig. 3 is a sectional view of a hermetically sealed container obtainable by sealing the easily-openable container as shown in Fig. 2 with a lid.

Fig. 4 is a sectional view illustrating the hermetically sealed container as shown in Fig. 3 being opened.

Fig. 5 is a sectional view of an easily-openable container according to another embodiment of the present invention.

Fig. 6 is a sectional view of a hermetically sealed container obtainable by sealing the easily-openable container as shown in Fig. 5 with a lid.

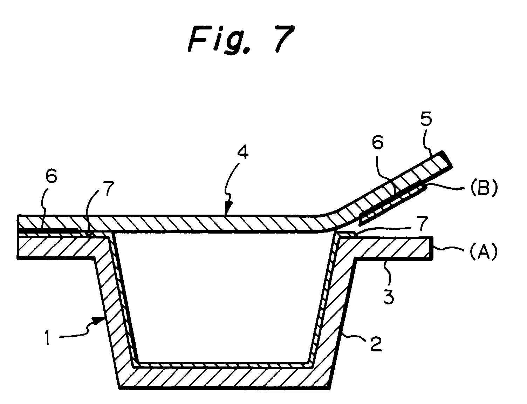

Fig. 7 is a sectional view illustrating the hermetically sealed container as shown in Fig. 6 being opened.

### DESCRIPTION OF THE PREFERRED EMBODIMENTS

Herein, the isotactic rates and syndiotactic rates of polypropylenes are determined from the positions and intensity ratios of the peaks of methyl groups which are indicated in a 100 MHz-¹³C-NMR spectrum of a 10% by weight solution of a polypropylene in *o*-dichlorobenzene.

Herein, the melt indexes (MI) of resins were measured according to JIS K 7120 under the conditions of testing temperature: 190°C and load: 2.16 kgf, and the haze values of resins were measured according to JIS K 7105.

### 〈Multilayer Sheet〉

The main layer (A) of the multilayer sheet of the present invention comprises a homopolypropylene having an isotactic rate of at least 90%, preferably at least 95%. Homopolypropylenes having isotactic rates of less than 90% decrease the rigidity of the main layer (A) and increase the peeling strength between the main layer (A) and an easily-peelable layer (B) formed from a homopolypropylene having a syndiotactic rate of 80% or more. The main layer (A) is preferably formed from homopolypropylenes having a melt index of 0.5 to 10 g/10 min.

The thickness of the main layer (A) is not particularly limited, and is generally preferably 200 to 2,000 µ m, more preferably 350 to 1,400 µ m.

The easily-peelable layer (B) being in contact with the main layer (A) comprises a propylene-ethylene random copolymer containing 2 to 50% by weight of copolymerized ethylene or a homopolypropylene having a syndiotactic rate of at least 80% (hereinafter, will sometimes be referred to as syndiotactic polypropylene).

The propylene-ethylene random copolymer contains 2 to 50% by weight, preferably 5 to 50% by weight of copolymerized ethylene. Propylene-ethylene random copolymers containing less than 2% by weight of copolymerized ethylene adhere strongly to the main layer (A), failing to endow the easily-peelable layer (B) with easy peelability. Propylene-ethylene random copolymers containing more than 50% by weight of copolymerized ethylene are generally poor in heat resistance and transparency due to their similarity to polyethylene in behavior.

Preferred propylene-ethylene random copolymers have a melt index of 0.5 to 10 g/10 min. When containers formed from the objective multilayer sheet are opened after heat-sealed with lids, layers of propylene-ethylene random copolymers having a melt index of less than 0.5 to 10 g/10 min may be difficult to cut by so-called edge effects at the inner edge of the annular heat-sealed portion, necessitating a weakening line for attaining easy-openability. Propylene-ethylene random copolymers having a melt index of more than 10 g/10 min may be difficult to control their flow on forming into film.

Usable syndiotactic polypropylenes have a syndiotactic rate of at least 80%, preferably at least 90%. Polypropylenes having a syndiotactic rate of less than 80% may increase the peel strength between the easily-peelable layer (B) and the main layer (A).

Preferred syndiotactic polypropylenes have a melt index of 0.5 to 10 g/10 min. When containers formed from the objective multilayer sheet are opened after heat-sealed with lids, layers of syndiotactic polypropylenes having a melt index of less than 0.5 g/10 min may be difficult to cut by so-called edge effects, necessitating a weakening line for attaining easy-openability. Syndiotactic polypropylenes having a melt index of more than 10 g/10 min may be difficult to control their flow on forming into film.

The preferred thickness of the easily-peelable layer (B) is generally 10 to 200 µ m, more preferably 10 to 50 µ m.

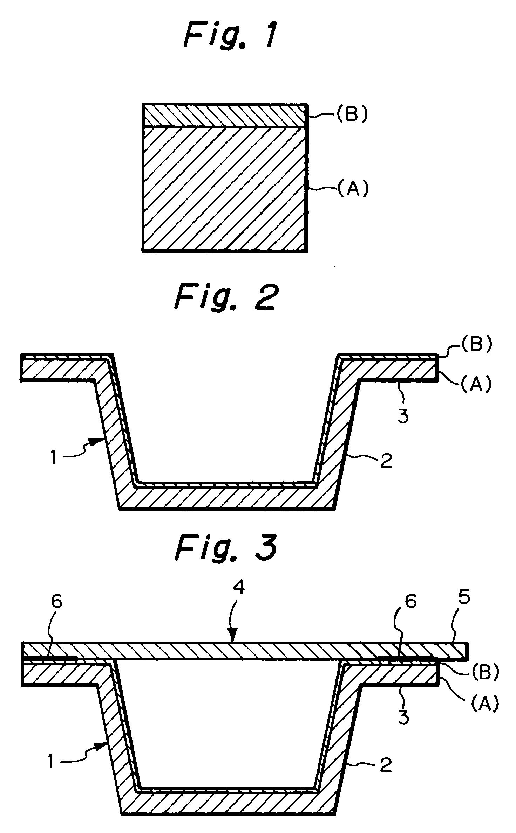

Fig. 1 shows a multilayer sheet of an embodiment according to the present invention, which has a two-layer structure consisting of a main layer (A) and an easily-peelable layer (B) being in contact with the main layer (A), wherein the delamination strength between the two layers (A) and (B) is generally 0.2 to 2.9 kg/25 mm (180° peeling, sample width: 25 mm, peeling rate: 20 mm/min) which ensures both moderate adhesion and easy peelability. That is, according to the present invention, it is possible to obtain multilayer sheets having excellent transparency and including a peelable layer and a base layer which adhere to each other with a moderate adhesion strength permitting easy peeling, without any conventional intervening layers for controlling peeling strength.

The multilayer sheet of the present invention can be produced by coextrusion or lamination using the above resins. Coextrusion may be performed, for example, by extruding the resin materials of the main layer (A) and the easily-peelable layer (B) from different extruders respectively, laminating them using feed blocks and then forming into a sheet using a flat die, or by using a multilayer die to carry out the lamination and the sheet forming in the die.

Usable lamination methods are, for example, extrusion lamination, hot melt lamination, dry lamination and wet lamination.

The layer structure of the multilayer sheet of the present invention is not limited to the two-layer structure shown in Fig. 1 consisting of a main layer (A) and an easily-peelable layer (B). Outside the main layer (A) may be provided layers of other materials for improving gas barrier properties or for preventing deformation of containers. Examples of the layers of other materials are high gas barrier resin layers made of transparent ethylene-vinyl alcohol copolymer (EVOH) or polyvinylidenechloride (PVDC). These layers of other materials may be bonded by adhesion layers, such as a layer of transparent ethylene-propylene rubber adhesives or transparent ethylene-vinyl acetate copolymer adhesives. For uses where transparency is not required, layers of other high gas barrier materials, such as deposited aluminum, aluminum foil, aluminum, iron or copper, may be provided. These layers of other materials may be provided individually or as a multilayer of two or more, and, for uses where transparency is not required, may be resin layers containing 10 to 80 % by weight of inorganic filler.

### 〈Easily-openable container〉

The easily-openable container of the present invention have the above multilayer structure comprising at least the main layer (A) and the easily-peelable layer (B), a sectional view of an embodiment of which is shown in Fig. 2. Fig. 2 shows an easily-openable container 1 having a concave portion 2 having an opening and a flange 3 which extends outwardly from the opening and is for annularly sealing thereon on the easily-peelable layer (B) the easily-openable container with a lid.

The easily-openable container (a) is produced by melting the multilayer sheet of the present invention with heat and forming into a desired shape preferably by, for example, common vacuum forming or pressure forming. It is also possible to employ injection molding, injection blow molding or blow molding, using the resin materials of the layers.

The concave portion of the easily-openable container (a) may be of any shape which can contain predetermined contents, such as a cup-shape or a tray-shape. The opening and the flange may also be of any shape, generally a circular shape or a rectangular shape, and a lid is annularly heat-sealed on the flange.

Lids may have any layer structure, such as a one-layer structure or a multilayer structure, so far as they have a sealant layer composed of a resin which strongly adhere with heat to the easily-peelable layer (B) of the easily-openable container, such as a resin which is the same with or similar to the easily-peelable layer; for example, if the easily-peelable layer (B) is made of the above propylene-ethylene random copolymer, propylene-ethylene random copolymers having about the same content of copolymerized ethylene, or polyethylene, and if the easily-peelable layer (B) is made of the above syndiotactic polypropylene, a syndiotactic polypropylene of the same kind, or polyethylene. The desirable interlaminar peeling strength between the sealant layer of lids with the easily-peelable layer (B) heat-sealed with each other is generally 3.0 kg/25 mm or more. Lids suitable for general uses have, for example, aluminum foil or a heat resistant film on the sealant layer.

Fig. 3 shows a sectional view of a sealed container produced by heat-sealing the easily-openable container 1 shown in Fig. 2 with a lid 4. The easily-openable container 1 is heat-sealed with a lid 4 at an annular sealing portion 6 on the flange 3, to give a hermetically sealed container.

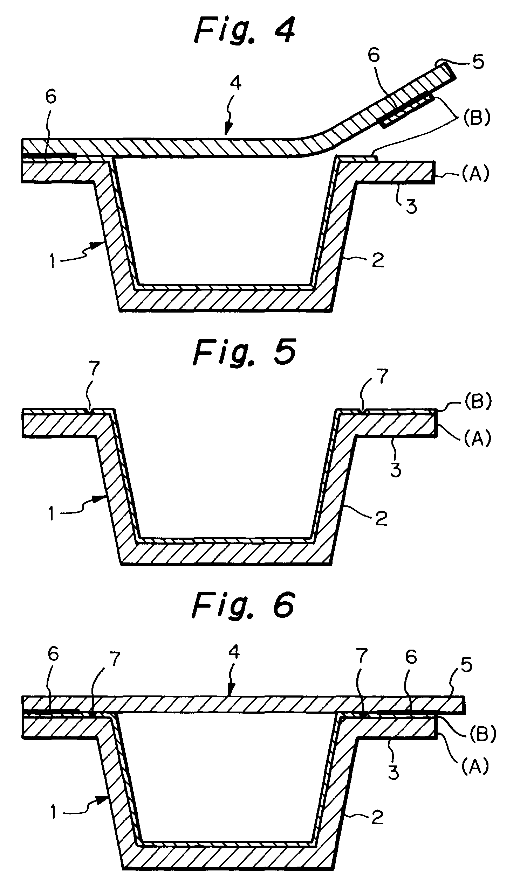

Fig. 4 shows the hermetically sealed container which is being opened. First a picking portion 5 is pulled upward. Then delamination occur in the easily-openable container 1 between the easily-peelable layer (B) and the main layer (A), and the easily-peelable layer (B) is peeled together with the lid 4 to seal end. At the seal end, the easily-peelable layer (B) is cut due to the edge effect of heat-sealing, resulting in the opening of the hermetically sealed container. Thus opening can be performed easily though the lid 4 and the easily-peelable layer (B) are strongly heat-sealed.

To facilitate the break of the easily-peelable layer (B), an annular weakening line may be formed in the easily-peelable layer (B) by heat-sealing using a heat-seal ring having an annular projection at the radially inner edge of its sealing surface. At the time of heat-sealing using such a heat-seal ring, the projection forms, through the lid 4, an annular weakening line in the easily-peelable layer (B), so that the easily-peelable layer (B) is broken easily at the weakening line to make opening more easy.

The easily-openable container (a') of the present invention is previously provided with an annular weakening line in the easily-peelable layer (B) on the flange to cause easy opening in the cases where the easily-peelable layer (B) is difficult to break by the edge effect of heat-sealing alone. The same easy openability as above can be ensured by heat-sealing a lid radially outside the weakening line. The weakening line is generally a continuous notch, and may be any other line which causes easy break of the easily-peelable layer (B) on pealing lids. The depth of the weakening line is not particularly limited, and the preferred depth is generally 50 to 100 % of the thickness of the easily-peelable layer (B).

Fig. 5 shows a sectional view of an embodiment of the easily-openable container (a'). On the flange 3, an annular continuous weakening line 7 (notch) is formed in the easily-peelable layer (B)

Fig. 6 shows a sectional view of a hermetically sealed container produced by annularly heat-sealing the easily-openable container 1 as shown in Fig. 5 on its flange 3 with a lid 4. A weakening line 7 is formed radially inner than an annular sealing portion 6. To open this hermetically sealed container, first a picking portion 5 is pulled upward. Then delamination of the easily-openable container 1 occurs between the easily-peelable layer (B) and the main layer (A), and the easily-peelable layer (B) is peeled off together with the lid 4 to the weakening line 7, to make the hermetically sealed container opened.

The space t between the radially inner end of the annular sealing portion 6 and the weakening line 7 is generally 10 mm or less, particularly preferably 0.2 to 10 mm. Due to the space between the annular sealing portion 6 and the weakening line 7, the hermetically sealed container can tolerate the internal pressure increased during boiling or retorting.

The multilayer sheet of the present invention can be used not only for the production of containers, but also for the production of packages of pouch type or lids for the production of easily-openable containers which are opened by using delamination of the lids.

Hereinafter, the present invention will be described in detail referring to Examples and Comparative Examples, which however do not limit the scope of the present invention.

### EXAMPLES 1 TO 4 AND COMPARATIVE EXAMPLES 1 AND 2

The resin materials of the main layer and the peelable layer as shown in Table 1 were extruded simultaneously from a multilayer extruder and were formed into two-layer sheets by using feed blocks and a flat die. Each two-layer sheet had a main layer of 800 µ m thick and a peelable layer of 50 µ m thick. The interlaminar peeling strength of each two-layer sheet between the main layer and the peelable layer was measured under the conditions of 180°-peeling, sample width: 25 mm, peeling rate: 20 mm/min. The results are shown in Table 1.

### EXAMPLES 5 TO 8

The two-layer sheets produced in Examples 1 to 4 were formed by vacuum forming into flanged containers each having a circular opening of 95 mm⌀ in diameter, a drawing ratio: 3, a depth of 50 mm and flange width of 7 mm. The haze value of the side wall of each container was measured according to JIS K 7105. The results are shown in Table 2.

The containers were filled with salad oil and allowed to stand for 7 days, to evaluate oil resistance. The results are shown in Table 2.

These containers were then filled with water and heat-sealed with lids by using a seal ring having a flat sealing surface. The lids were sheets consisting of a base layer (thickness: 100 µ m) and a sealant layer (thickness: 20 µ m), the resin materials of which are shown in table 2. The heat-sealing conditions were as follows: sealing width: 7 mm, heat-seal ring temperature: 190°C, pressure: 5 kgf/cm², sealing time: 2 seconds.

The hermetically sealed containers thus obtained were subjected to retorting treatments each at 115°C, 120°C, 125°C and 130°C, respectively, to observe deformation of the containers caused by the retorting. The results are shown in Table 2.

Further, the two-layer sheets produced in Examples 1 to 4 were formed into containers in the same manner as above, and an annular notch of 50 µ m in depth was formed in the easily-peelable layer of the flange of each container. By using the notched containers, hermetically sealed containers were produced in the same manner as above, except that they were not filled with water. At the time, heat-sealing was so performed that the notch was located at the radially inner end of the annularly sealed portion. When the thus obtained hermetically sealed containers were tested for openability, the easily-peelable layer of every hermetically sealed container was peeled together with the lid and then cut at the notch, and the containers could be opened easily. The results are shown in Table 3.

### COMPARATIVE EXAMPLE 3

A container and a hermetically sealed container were produced in the same manner as described above and were then subjected to the same tests as described above, except that the multilayer sheet used was a multilayer sheet consisting of a base layer (thickness: 750 µ m) of polypropylene, a peelable layer (thickness: 50 µ m) of polyethylene and a polypropylene/polyethylene blend resin layer (thickness: 50µ m) interposed between the base layer and the peelable layer, and the lid used was a two-layer sheet (Trade name: NLB, produced by San-eh Kagaku Co., Ltd.) consisting of a base layer (thickness: 100µ m) of oriented nylon film and a sealant layer (thickness: 20 µ m) of linear low density polyethylene (LLDPE). The results are shown in Tables 2 and 3.

The abbreviations in Tables 1, 2 and 3 have the following meanings.
Homo-PP: homopolypropylene (Trade name: IDEMITSU E105GM, produced by Idemitsu Petrochemical Co., Ltd., isotactic rate: 95%, MI: 0.5 g/10 min)
Homo-PE: homopolyethylene (Trade name: IDEMITSU 440M, produced by Idemitsu Petrochemical Co., Ltd., MI: 1.0 g/10 min)
PP+PE blend-1: 52.0 % by weight of homopolypropylene (Trade name, IDEMITSU E105GM, produced by Idemitsu Petrochemical Co., Ltd., isotactic rate: 95%, MI: 0.5 g/10 min) + 40.5 % by weight of propylene-ethylene block copolymer (Trade name: IDEMITSU E170G, produced by Idemitsu Petrochemical Co., Ltd., polymerized ethylene content: 15 % by weight, MI: 0.5 g/10 min) + 5.0 % by weight of low density polyethylene (Trade name: FZ038, produced by Mitsubishi Petrochemical Co., Ltd., MI: 0.3 g/10 min) + 2.5 % by weight of high density polyethylene (Trade name: IDEMITSU 520MB, produced by Idemitsu Petrochemical Co., Ltd., MI: 0.25 g/10 min)
PP+PE blend-2: 80 % by weight of homopolypropylene (Trade name: IDEMITSU E105GM, produced by Idemitsu Petrochemical Co., Ltd., isotactic rate: 95 %, MI: 0.5 g/10 min) + 16 % by weight of low density polyethylene (Trade name: FZ038, produced by Mitsubishi Petrochemical Co., Ltd., MI: 0.3 g/10 min) + 4 % by weight of high density polyethylene (Trade name: IDEMITSU 540B, produced by Idemitsu Petrochemical Co., Ltd., MI: 0.35 g/10 min)
2% RPE: propylene-ethylene random copolymer having a polymerized ethylene content of 2 % by weight (Trade name: EG270, produced by Showa Denko K. K., MI: 3 g/10 min)
3% RPE: propylene-ethylene random copolymer having a polymerized ethylene content of 3 % by weight (Trade name: HT2014, produced by Chisso Co., Ltd., MI: 1.85 g/10 min)
5% RPE: propylene-ethylene random copolymer having a polymerized ethylene content of 5 % by weight (MI: 1.5 g/10 min)
SPP: syndiotactic polypropylene (syndiotactic rate: 93 %, MI: 3 g/10 min)

**TABLE 1**

| | Main layer | Peelable layer | Peeling strength (kg/25 mm) |
|---|---|---|---|
| Comparative Example 1 | homo-PP | homo-PP | Not peeled |
| Comparative Example 2 | homo-PP | PP+PE blend-1 | Not peeled |
| Example 1 | homo-PP | 2% RPE | 2.9 |
| Example 2 | homo-PP | 3% RPE | 2.5 |
| Example 3 | homo-PP | 5% RPE | 2.0 |
| Example 4 | homo-PP | SPP | 1.7 |

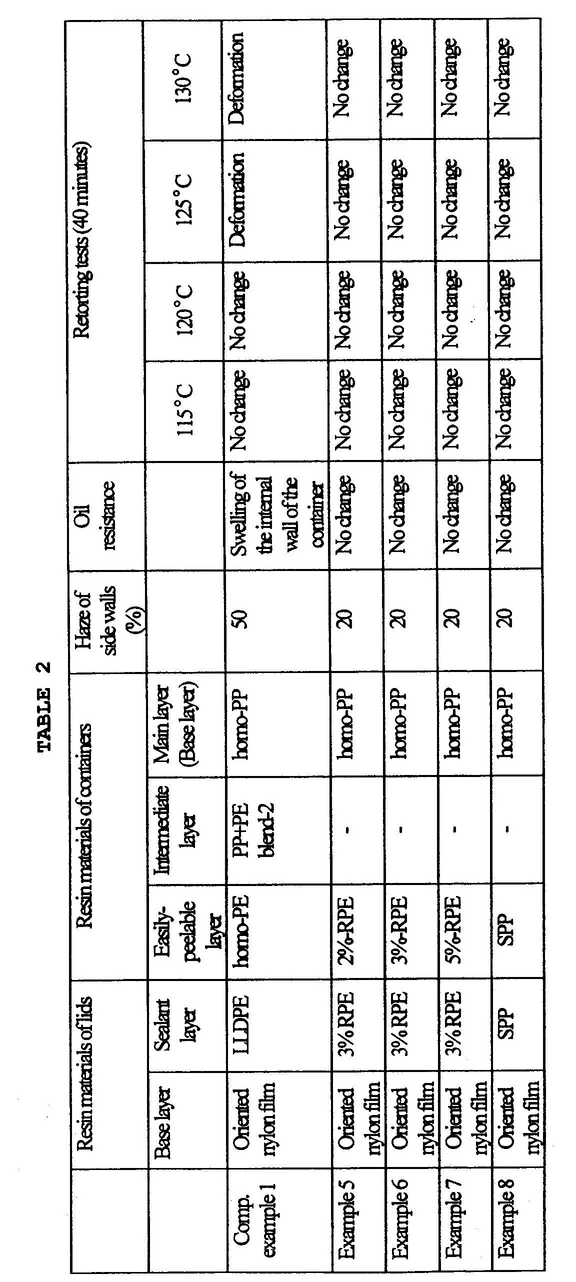

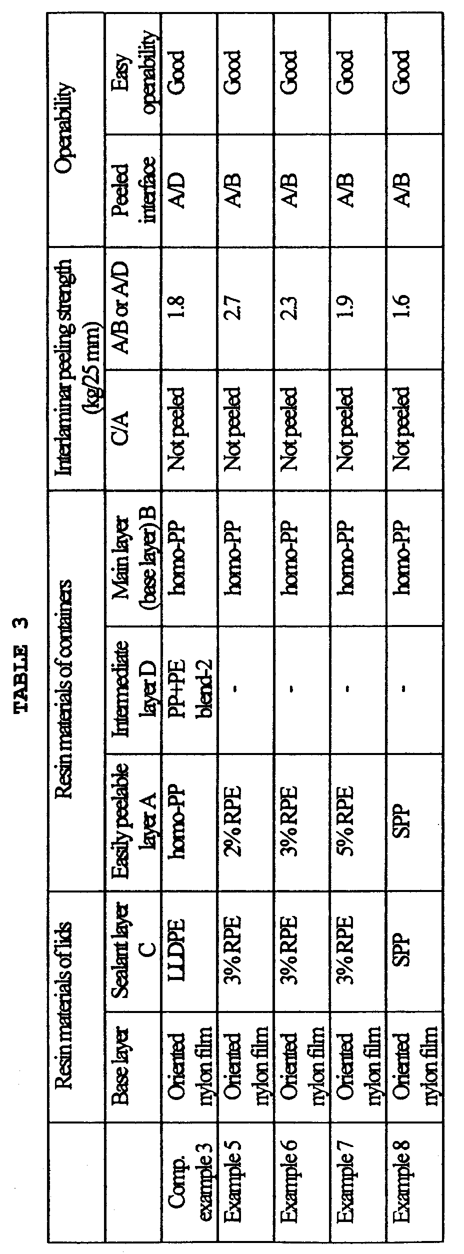

The present invention provides a polypropylene-base multilayer sheet which is transparent and excellently thermally stable and has a peelable layer composed of a polypropylene-base resin and having a peeling strength suitable for the production of easy-peel containers. The multilayer sheet of the present invention can be produced with low cost since it needs no intermediate layers for controlling the peeling strength between the easily-peelable layer and the main layer. The easily-openable container of the present invention having the same layer structure as that of the multilayer sheet, after heat-sealed with a lid, exhibits high sealing and good easy-openability, and, due to the absence of the conventional polyethylene easily-peelable layer which are inferior in thermal stability and oil resistance, the easily-openable container is free from deformation or swelling even if it is subjected to retorting treatment or filled with oil-containing contents.

## Claims

1. A multilayer sheet which has a multilayer structure comprising at least
a main layer (A) comprising a homopolypropylene having an isotactic rate of at least 90% and
an easily-peelable layer (B) which is in contact with the main layer (A) and comprises a propylene-ethylene random copolymer containing 2 to 50% by weight of copolymerized ethylene or a homopolypropylene having a syndiotactic rate of at least 80%.

2. The multilayer sheet of claim 1, wherein the main layer (A) comprises a homopolypropylene having an isotactic rate of at least 95%, and wherein the easily-peelable layer (B) comprises a propylene-ethylene random copolymer containing 5 to 50% by weight of copolymerized ethylene or a homopolypropylene having a syndiotactic rate of at least 90%.

3. The multilayer sheet of claim 1, wherein the main layer (A) comprises a homopolypropylene having an isotactic rate of at least 95% and a melt index of 0.5 to 10 g/10 min, and wherein the easily-peelable layer (B) comprises a propylene-ethylene random copolymer containing 5 to 50% by weight of copolymerized ethylene and a melt index of 0.5 to 10 g/10 min or a homopolypropylene having a syndiotactic rate of at least 90% and a melt index of 0.5 to 10 g/10 min.

4. The multilayer sheet of claim 1, wherein the main layer (A) and the easily-peelable layer (B) adhere to each other with a peeling strength of 0.2 to 2.9 kg/25 mm.

5. The multilayer sheet of claim 1, wherein the main layer (A) comprises a homopolypropylene having an isotactic rate of at least 95% and a melt index of 0.5 to 10 g/10 min, and wherein the easily-peelable layer (B) comprises a propylene-ethylene random copolymer containing 5 to 50% by weight of copolymerized ethylene and a melt index of 0.5 to 10 g/10 min or a homopolypropylene having a syndiotactic rate of at least 90% and a melt index of 0.5 to 10 g/10 min, and wherein the main layer (A) and the easily-peelable layer (B) adhere to each other with a peeling strength of 0.2 to 2.9 kg/25 mm.

6. The multilayer sheet of claim 1, wherein the multilayer structure consists of the main layer (A) and the easily-peelable layer (B).

7. An easily-openable container which comprises
a multilayer structure of the multilayer sheet of claim 1 comprising at least the main layer (A) and the easily-peelable layer (B),
a concave portion having an opening and
a flange which extends outwardly from the opening and is for annularly sealing thereon a lid with the easily-peelable layer (B).

8. An easily-openable container, comprising
a multilayer structure of the multilayer sheet of claim 1 comprising at least the main layer (A) and the easily-peelable layer (B),
a concave portion having an opening and
a flange which extends outwardly from the opening, is for annularly sealing thereon a lid with the easily-peelable layer (B), and has an annular weakening line in the easily-peelable layer (B) between the opening and an annular sealing portion for annularly sealing the easily-openable container with a lid.

9. The easily-openable container of claim 7 or claim 8, wherein the main layer (A) comprises a homopolypropylene having an isotactic rate of at least 95%, and wherein the easily-peelable layer (B) comprises a propylene-ethylene random copolymer containing 5 to 50% by weight of copolymerized ethylene or a homopolypropylene having a syndiotactic rate of at least 90%.

10. The easily-openable container of claim 7 or claim 8, wherein the main layer (A) comprises a homopolypropylene having an isotactic rate of at least 95% and a melt index of 0.5 to 10 g/10 min, and wherein the easily-peelable layer (B) comprises a propylene-ethylene random copolymer containing 5 to 50% by weight of copolymerized ethylene and a melt index of 0.5 to 10 g/10 min or a homopolypropylene having a syndiotactic rate of at least 90% and a melt index of 0.5 to 10 g/10 min.

11. The easily-openable container of claim 7 or claim 8, wherein the main layer (A) and the easily-peelable layer (B) adhere to each other with a peeling strength of 0.2 to 2.9 kg/25 mm.

12. The easily-openable container of claim 7 or claim 8, wherein the main layer (A) comprises a homopolypropylene having an isotactic rate of at least 95% and a melt index of 0.5 to 10 g/10 min, and wherein the easily-peelable layer (B) comprises a propylene-ethylene random copolymer containing 5 to 50% by weight of copolymerized ethylene and a melt index of 0.5 to 10 g/10 min or a homopolypropylene having a syndiotactic rate of at least 90% and a melt index of 0.5 to 10 g/10 min, and wherein the main layer (A) and the easily-peelable layer (B) adhere to each other with a peeling strength of 0.2 to 2.9 kg/25 mm.

13. The easily-openable container of claim 7 or claim 8, wherein the multilayer structure consists of the main layer (A) and the easily-peelable layer (B).

14. The easily-openable container of claim 7, which is produced by forming the multilayer sheet of any of the claims 1 to 6.

15. The easily-openable container of claim 8, which is produced by forming the multilayer sheet of any of the claims 1 to 6 and forming the weakening line in the easily-peelable layer.
